# EUROPEAN PATENT APPLICATION

(11) **EP 2 660 769 A1**
(43) Date of publication of application: **06.11.2013**
(21) Application number: 10861487.6
(22) Date of filing: 30.12.2010
(51) Int. Cl.: G06Q 40/00

(54) **TERMINAL FOR CONDUCTING GAMING SESSIONS ON EXCHANGES**

(71) Applicant: Kligman, Ilya Vladimirovich, St.Petersburg 197198 (RU); Migalev, Cergey Vladimirovich, Rostov-na-Donu 344000 (RU)
(72) Inventor: Kligman, Ilya Vladimirovich, St.Petersburg 197198 (RU); Migalev, Cergey Vladimirovich, Rostov-na-Donu 344000 (RU)
(74) Representative: Kietzmann, Manfred
(86) International application number: PCT/RU2010/000807
(87) International publication number: WO 2012/091602

(57) **Abstract**

The invention relates to the systems for assistance in financial transactions. The terminal for trading on the exchange markets, comprising of a monitor for displaying of target information with a keyboard-type input device, a money input device for financial operations, as well as with communication devices for remote servers and a computing device for graphic information displaying in the fields of an interface displayed on the monitor screen and for settlement transactions. The computing device has a feature of quotations broadcasting received from the exchange markets or information agencies and with a feature of transfer, by a signal of the trading session termination, of a premium to the current account of the payer or distribution of a premium through the payment device. The terminal has a unit of the stake or transaction amount choice and limiting of risks to the amount of this stake or transaction, and the computing device as an additional option of implementation of feature of transactions calculation, input of the price of change of at least one rate and input of increased or decreased stake or invariance stake at least of one future quotation.

## Description

The invention relates to the systems for assistance in financial transactions, providing fast trading and fast distribution of material remuneration as a result of trading.

The prior art is the exchange trading system comprising of a computer; many information sets about tendering received by the computer, and each of the abovementioned information sets about tendering describes a trading session of the first trader; many information sets about quotas of the trading received by the computer, whereas each of the abovementioned information sets about quotas of the trading describes the trading held by the order of the second trader; a set of the preset acceptable parameters of trading and software features carried out by the computer to compare information sets about tendering with information sets about quotas of the trading and to define coincidences if information set about tendering and information set about quotas of the trading conform within a set of preset acceptable trading parameters (RU No.2259586, G 06 F 17/60, published 2005.08.27).

Weakness of the present systems is its complexity not only in hardware but also in insufficient functionality excluding possibility of remote access to the trading of other persons, but not only officially registered for participation in trading.

The prior art is the remote communication terminal for trading on the exchange markets, comprising of a monitor and a push-button or touch keyboard or a touch monitor with a keyboard on a monitor screen, a payment card reader, a money input system, a device for remote connection in the form of a programming and computing unit having feature of graphic interface displaying with the fields for target information displaying, with the relevant control server for the user's account state, as well as money output device, characterized in that the programming and computing unit has additional feature of remote connection with servers of the exchange markets and information agencies for displaying in the specified fields of information about the current quotations, stakes and calculation of profit and loss for each transaction, thus the specified unit also has a feature of displaying of stakes, with a feature of input of the price for a point change and a stake amount through the keyboard and transfer of a premium to the account of a payment card holder or output of a premium through a money output device (RU No. 64405, G06F19/00, published 27.06.2007).

The disadvantage of this solution is that for trading on such terminal the user must have special knowledge to stake correctly. Given that that for certain real periods there are probabilistic estimates of possible stakes on the basis of earlier received results and approximations or correlations, it is possible to receive rather probabilistically reliable data on the future quotations that increases probability of the user's success at the trading.

The given solution is accepted as a prototype for all claimed objects.

The chief matter of invention is implementation of the terminal for simple trading. Such terminal is qualified as the gaming equipment and can be placed in game clubs, casinos and club-type resting places.

The terminal is operated according to the principles of Forex international exchange market. To ensure normal operation of such terminal it is necessary to provide real time broadcasting of the currency market quotations for the trading tools on that terminal and to implement the profit calculation algorithm for transactions made by a client.

Quotations source can be both widely known information sources - "Reuters", "Bloomberg", "Tenfore", and dealing centres providing access to trade operations on Forex market through the Internet.

Besides, transactions made through the terminal can be introduced, through one of the dealing centres, to the real market that makes such terminal not the gambling and staking equipment but the remote terminal for the stock exchange transactions.

The object of the present invention is to achieve the technical result consisting in convenience the terminal operation at the financial transactions complying with the automated mode of risks limiting by using of mode of automated calculation of increased and decreased stakes or invariance stake of at least one future quotation.

The claimed technical result is achieved in that the terminal for trading on the exchange markets, comprising of a monitor for displaying of target information with a keyboard-type input device, a money input device for financial operations, as well as with communication devices for remote servers and a computing device for graphic information displaying in the fields of an interface displayed on the monitor screen and for settlement transactions, herewith the computer has a feature of quotations broadcasting received from the exchange markets or information agencies and with a feature of transfer, by a signal of the trading session termination, of a premium to the current account of the payer or distribution of a premium through the payment device, has a unit of the stake or transaction amount choice and limiting of risks to the amount of this stake or transaction, and the computing device has an additional option of implementation of feature of transactions calculation, input of the price of change of at least one rate and input of increased or decreased stake or invariance stake of at least one future quotation.

The specified features are essential and are interconnected with development of a steady set of essential features, sufficient to receive the demanded technical result.

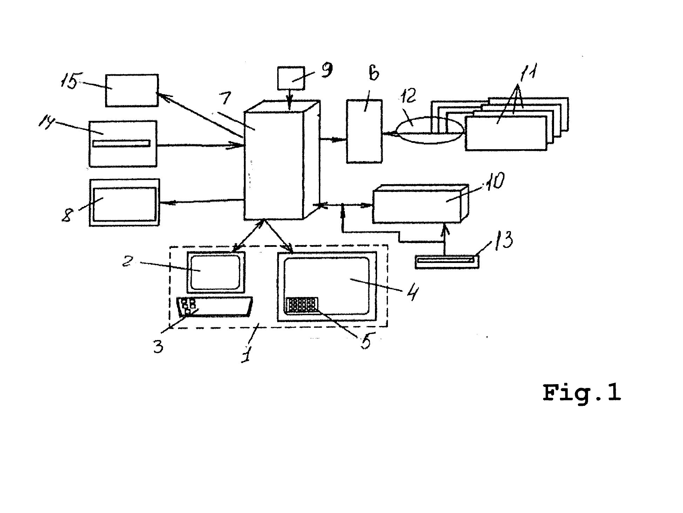

The present invention is explained by specific case of embodiment which, however are not unique, but demonstrate possibility of achievement of the claimed technical result. On fig.1 - terminal flowchart.

The remote communication terminal for trading on the exchange comprises the information input 1 and reading device in the form of a monitor 2 and a push-button or touch keyboard 3 or a touch monitor 4 with a keyboard 5 on the monitor screen, a communications device 6 with remote servers and a computing unit 7 having a feature of graphic information displaying in the interface, displayed on the monitor screen and of settlement operations execution. The computing device has a feature of quotations broadcasting received from the exchange markets or information agencies and with a feature of transfer, by a signal of the trading session termination, of a premium to the current account of the payer or distribution of a premium through 8 the payment device. Besides, the computing device has an additional option of implementation of feature of transactions calculation, input of the price of change of at least one rate and input of increased or decreased stake or invariance stake of at least one future quotation.

The terminal has a unit 9 of stake or transaction amount choice and of limiting of risks to the amount of this stake or transaction.

The computing unit is connected on the one side with the relevant control server 10 or the user's account state, for example the bank issuing a payment, (for example, credit and financial) card if the access to the trader's account is provided through the card, and on the other side with a source(s) of 11 quotations and other exchange information, such as - "Reuters", "Bloomberg", "Tenfore", and dealing centres providing access to the trade operations on the Forex market on the Internet 12).

Besides, the terminal comprises, for example, the financial and credit card reader 13, directly or remotely connected with the control server 10 for the user's account state.

The terminal also comprises the money input device 14 and the money output device 15 that allows to pay for the stake and to receive a premium at the place of the terminal location. The device 13 can be executed in the form of a unit built into the terminal case, or located outside the latter at a distance and connected with the programming and computing unit. This unit can have not only features of transfer of funds to the user's account, but also of writing-off of amounts from the user's account and/or output of these amounts. Such construction allows to use various mechanisms of account crediting and to use proximity cards (work on the principle of credit cards, but to write-off the funds it is necessary just to bring the card to the device (to rest or bring to a distance of not more than 10 cm), payments by means of the telephone set, electronic payment systems, account and password in the sponsoring organization, cash and card reader: on the terminal, in the institution's box office, scratch cards (issued with the fixed face value (a 500-roubles card, a code field is rubbed, a code is entered to the device).

The device 6 has a feature of remote connection with the server/s of the exchange and information agencies for displaying on the monitor's screen in the specified fields of information about the current quotations, stakes and calculation of profit and loss for each transaction. The specified unit also has a feature of displaying of the stakes made, with a feature of input of the price for a rate (point) change and a stake amount through the keyboard and transfer of a premium to the account of a credit and financial card holder or output of a premium through a money output device.

To simplify access to the terminal and transfer of the amount into the trading account of the clients it can be additionally equipped with the dactyloscopic control and authentication system. To manage the terminal the latter is additionally equipped with a voice control system. These terminal features allow to control the user's authenticity. During a session a client chooses a trade tool (for example - a currency pair) and cost of at least one minimum price change for this trade tool. Next, according to its expectations and the current quotations feed, a client takes a position by executing a commercial transaction for purchase or sale of a trade tool. According to the current quotations feed, the terminal calculates the client's profit (loss) amount and displays to the client the generated cash balance. The client can at any moment close its position by execution of an opposite transaction (to buy if he was selling or conversely).

Thus one gambling cycle comes to the end. The number of gambling cycles within one session is limited only to the cash balance. The gambling cycle can be terminated forcibly if the price changes for the chosen trade tool led to the fact that the cash balance is zero.

Essential advantage of the invention is that there is no need in complex and long-term procedures of preliminary clients registration, bank accounts opening, transfer of money to the dealing centre. All operations and settlements with the client are carried out directly through the terminal on site. The terminal is an essentially new gambling tool and will contribute to new clients acquisition, including regular, since there are no other available systems of gambling as simple as this system is. From the clients' point of view the terminal is attractive because it operates on the basis of world quotations of trade tools. These quotations can be easily checked through alternative information sources (such as TV channels and the Internet publications) that makes impossible to manipulate with quotations in favour of an organisation (where a terminal is installed) and significantly reduces incidences of fraud.

As for implementation of "the programming and computing unit having a feature of... ", the algorithm of such unit operation is described, for example in the book of Olga Degtyareva, Olga Kandinskaya "Stock-exchange industry: University textbook", M, Banks and exchanges, UNITI, 1997 503 pages, ISBN 5-85173-060-9, chapter 7 "Development of electronic exchange trading system", section 7.3 "Electronic Algorithms for Trading", section 7.4.2 "Illustration of Electronic Trading Operation (by the example of ATC/2 System)" (an electronic version of this section is attached), presented in 2003 on the official site "Olga Kandinskaya's Economic Site" online and which can be fount out at the following link: http://kandinskaya.narod.ru/delo07 r.html.

In this book there are examples of implementation of the main electronic exchange components, including calculations algorithm, interaction schemes, usage of software and hardware by the example of computers of 386 and 486 series. In particular, the example of electronic trading operation using ATC/2 system is provided in detail. Under transactions algorithm, described in this book, is understood the transactions scenario, that is a sequence of actions and a set of conditions under which an object is purchased and sold. Therefore, such feature as "the computing device having a feature of stakes accepting and calculation of profit and loss for each transaction" in relation to the modern state of art which become widely known in the field of exchange transactions, was not disclosed in the patent specification.

The present invention is industrially applicable as it can be implemented using technologies applied in production of electronic and mechanical gaming machines and computerized remote access systems.

## Claims

1. The terminal for trading on the exchange markets, comprising of a monitor for displaying of target information with a keyboard-type input device, a money input device for financial operations, as well as with communication devices for remote servers and a computing device for graphic information displaying in the fields of an interface displayed on the monitor screen and for settlement transactions, herewith the computer has a feature of quotations broadcasting received from the exchange markets or information agencies and with a feature of transfer, by a signal of the trading session termination, of a premium to the current account of the payer or distribution of a premium through the payment device, has a unit of the stake or transaction amount choice and limiting of risks to the amount of this stake or transaction, and the computing device as an additional option of implementation of feature of transactions calculation, input of the price of change of at least one rate and input of increased or decreased stake or invariance stake at least of one future quotation.
